# DEMANDE DE BREVET EUROPEEN

(11) **EP 1 110 852 A1**
(43) Date de publication de la demande: **27.06.2001**
(21) Numéro de dépôt: 00403594.5
(22) Date de dépôt: 19.12.2000
(51) Int. Cl.: B62D 55/065

(54) **Dispositif à chenilles souples, en particulier pour véhicule tout terrain**

(30) Priorité: 22.12.1999 FR 9916259
(71) Demandeur: Otico, 77650 Longueville (FR)
(72) Inventeur: Phely, Olivier, 77650 Saint Colombe (FR)
(74) Mandataire: Bezault, Jean

(57) **Abrégé**

Un dispositif à chenilles souples propre à être implanté sous le châssis d'un véhicule comprend au moins deux groupes (18) de chenilles (20) propres à être espacés dans la direction transversale et comprenant chacun deux chenilles (20), à bande souple sans fin (24), montées en parallèles et portées par un support commun (22). Le support commun (22) est muni d'un mécanisme articulé (48) propre à être fixé au châssis et comprenant un axe transversal (YY) et de préférence un axe longitudinal (XX), en sorte que le support commun (22) d'un groupe de chenilles peut osciller par rapport au châssis, indépendamment du support commun d'un autre groupe de chenilles. Application notamment aux véhicules tout terrain, motorisés ou non-motorisés.

## Description

L'invention se rapporte aux dispositifs à chenilles souples, destinés notamment aux véhicules tout terrain, tels que les engins agricoles, viticoles et ostréicoles ou les engins de travaux publics et forestiers.

Elle concerne plus particulièrement un dispositif comprenant des chenilles à bande souple sans fin et propre à être implanté sous le châssis d'un tel véhicule.

On connaît déjà des dispositifs à chenilles de ce type qui comprennent au moins une chenille formée d'une bande souple sans fin qui s'enroule autour de deux roues principales, portées habituellement par les deux extrémités d'une poutre, et autour de roues de support disposées entre les roues principales.

Dans les dispositifs connus de ce genre, l'une de ces roues principales constitue une roue motrice et le dispositif à chenilles constitue alors un dispositif d'entraînement utilisé habituellement sur des engins motorisés.

Des dispositifs d'entraînement de ce type sont connus en particulier d'après les brevets FR-A-2 711 959 et 2 768 387 au nom de la Demanderesse.

Ces dispositifs à chenilles ont pour avantage essentiel de procurer une surface de contact au sol beaucoup plus importante que les roues classiques équipées de pneumatiques, ce qui permet de diminuer la pression au sol et de pouvoir utiliser ces véhicules dans des conditions sévères, en particulier dans des terrains détrempés.

En outre, les dispositifs à chenilles souples ont l'avantage de permettre aux véhicules de pouvoir se déplacer sur les routes à une vitesse comparable à celle des véhicules à roues équipées de pneumatiques, et en tout cas supérieure à celle des véhicules à chenilles formées de maillons articulés.

Comme indiqué, ces dispositifs à chenilles souples ont jusqu'à présent été utilisés en tant que dispositifs d'entraînement sur des engins motorisés.

Or, la Demanderesse a constaté que de tels engins servent souvent à tracter des remorques qui sont munies de roues classiques à pneumatiques dont la pression au sol est notablement plus élevée que celle des chenilles du tracteur. Il en résulte que, dans certaines conditions extrêmes, la remorque risque de s'embourber ou de créer des ornières ou sillons défavorables derrière le tracteur.

L'invention a notamment pour but de surmonter cet inconvénient.

De façon plus générale, l'invention vise à procurer un dispositif à chenilles souples qui permet de diminuer davantage la pression au sol par rapport aux dispositifs existants à chenilles souples ou aux dispositifs existants équipés de pneumatiques à basse pression.

Elle vise aussi à procurer un tel dispositif à chenilles souples qui peut équiper différents types de véhicules, en particulier des véhicules tout terrain.

L'invention vise également à procurer un tel dispositif à chenilles souples qui peut équiper soit des véhicules motorisés, soit des véhicules tractés.

Elle vise encore à procurer un tel dispositif à chenilles qui peut être facilement implanté sous le châssis d'un véhicule existant.

L'invention propose à cet effet un dispositif à chenilles souples, du type défini en introduction, lequel comprend au moins deux groupes de chenilles propres à être espacés dans la direction transversale et comprenant chacun deux chenilles, du type à bande souple sans fin, montées en parallèles et portées par un support commun, et dans lequel le support commun est muni d'un mécanisme articulé propre à être fixé au châssis du véhicule et comprenant un axe transversal, en sorte que le support commun d'un groupe de chenilles peut osciller autour dudit axe transversal, indépendamment du support commun d'un autre groupe de chenilles.

Ainsi, le dispositif à chenilles souples de l'invention comprend au moins deux groupes de chenilles, dont chacun est constitué de deux chenilles souples portées par un support commun, lequel peut osciller par rapport au châssis suivant un axe transversal. Par l'expression "axe transversal", on entend désigner un axe horizontal qui s'étend perpendiculairement à la longueur, ou direction longitudinale, du châssis du véhicule.

Il en résulte que chaque support commun et les deux chenilles associées peuvent osciller dans un plan longitudinal autour de cet axe transversal, ce qui permet à chaque groupe de chenilles d'épouser le terrain sur lequel se déplace le véhicule.

On comprendra que généralement, le dispositif à chenilles comprend deux groupes de chenilles placées respectivement du côté droit et du côté gauche du véhicule en étant espacés l'un de l'autre. Toutefois, il est envisageable aussi, pour des véhicules de très grande largeur, de prévoir un ou plusieurs groupes de chenilles supplémentaires placés dans une région centrale. Chaque groupe de chenilles forme ainsi une paire de chenilles, que l'on peut aussi appeler des "chenilles jumelées".

Dans une forme de réalisation préférée de l'invention, le mécanisme articulé comprend en outre un axe longitudinal qui s'étend orthogonalement par rapport à l'axe transversal, en sorte que le support commun d'un groupe de chenilles peut osciller autour de deux axes orthogonaux.

Il en résulte que chaque support commun et les deux chenilles associées peuvent alors osciller dans un plan longitudinal autour de l'axe transversal et dans un plan transversal autour de l'axe longitudinal, ce qui permet une meilleure adaptation à la configuration du terrain sur lequel se déplace le véhicule.

Dans cette forme de réalisation préférée de l'invention, le mécanisme articulé comprend avantageusement un élément supérieur propre à être relié au châssis et un élément inférieur articulé d'une part à l'élément supérieur par l'axe longitudinal et d'autre part au support commun par l'axe transversal, de sorte que l'axe longitudinal se trouve placé au dessus de l'axe transversal.

Avantageusement, le dispositif comprend un jeu de butées pour définir une amplitude d'oscillation du support commun par rapport au châssis autour de l'axe transversal.

Dans une première forme de réalisation de l'invention, chacune des deux chenilles d'un même groupe de chenilles comprend une poutre porteuse supportant des roues autour desquelles s'enroule la bande souple sans fin, les deux poutres porteuses étant montées fixes sur le support commun en étant parallèles et espacées l'une de l'autre.

Il est avantageux alors que le support commun soit fixé, par l'intermédiaire du mécanisme articulé, sur une poutre oscillante propre à osciller autour d'un pivot transversal par rapport au châssis.

De façon avantageuse, chaque poutre oscillante a une première extrémité articulée à un premier étrier et une seconde extrémité articulée, par une biellette, à un deuxième étrier, ce premier étrier et ce second étrier étant montés sous le châssis du véhicule par l'intermédiaire de suspensions.

Dans cette première forme de réalisation, le dispositif comprend avantageusement un cadre propre à être fixé sous le châssis du véhicule et sur lequel sont montées les poutres oscillantes respectives des groupes de chenilles.

Dans une deuxième forme de réalisation de l'invention, chacune des deux chenilles d'un même groupe de chenilles comprend une poutre porteuse supportant des roues autour desquelles s'enroule la bande souple sans fin, les deux poutres porteuses étant propres à osciller de manière indépendante autour d'un pivot transversal du support commun, en restant dans des plans parallèles et espacés l'un de l'autre.

Dans cette forme de réalisation, le support commun est avantageusement monté sous le châssis par l'intermédiaire du mécanisme articulé. En ce cas, le mécanisme articulé peut être fixé sous le châssis soit directement, soit par l'intermédiaire d'une tourelle d'axe vertical.

Dans une première version de l'invention, chacune des deux chenilles d'un même groupe de chenilles comprend des roues autour desquelles s'enroule la bande souple sans fin, et l'une au moins des roues est motrice.

Dans une autre version de l'invention, chacune des deux chenilles d'un même groupe de chenilles comprend des roues autour desquelles s'enroule une bande souple sans fin, et toutes les roues sont non-motrices.

La première version convient essentiellement à des véhicules tractés mais peut être aussi utilisée sur des remorques motorisées comportant, par exemple, un moteur hydraulique couplé au moteur du véhicule tracteur. La deuxième version convient essentiellement pour les véhicules du type remorque.

Selon encore une autre caractéristique de l'invention, l'une au moins des roues est équipée d'un frein, en particulier d'un frein à tambour.

Dans la description qui suit, faite seulement à titre d'exemple, on se réfère aux dessins annexés, sur lesquels :
- la figure 1 est une vue de côté d'un véhicule du type remorque équipé d'un dispositif à chenilles souples selon une première forme de réalisation de l'invention ;
- la figure 2 est une vue partielle de dessus des chenilles du dispositif de la figure 1 ;
- la figure 3 est une vue de côté, à l'échelle agrandie, d'un dispositif à chenilles selon une première forme de réalisation de l'invention ;
- la figure 4 est une vue partielle en coupe horizontale du dispositif de la figure 3 ;
- la figure 5 est une vue partielle en coupe verticale du dispositif à chenilles des figures 3 et 4 ;
- la figure 6 est une vue de côté d'un véhicule du type remorque équipé d'un dispositif à chenilles souples selon une deuxième forme de réalisation de l'invention ;
- la figure 7 est une vue de côté à échelle agrandie du dispositif à chenilles souples de la figure 6 ;
- la figure 8 est une vue en coupe horizontale du dispositif de la figure 7 ; et
- la figure 9 est une vue en coupe verticale du dispositif des figures 7 et 8.

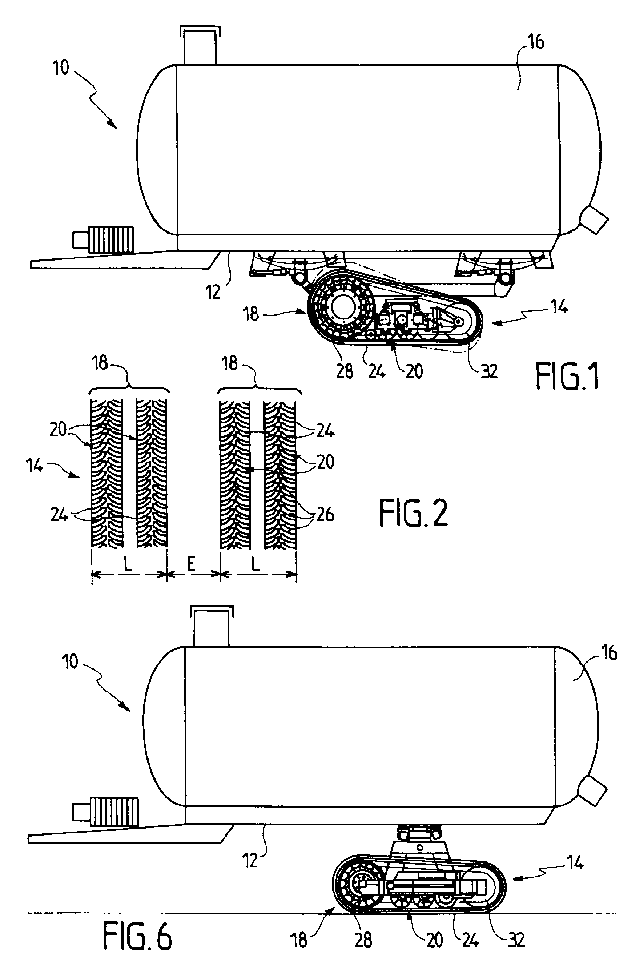

On se réfère d'abord à la figure 1 qui montre un véhicule 10 du type remorque comportant un châssis 12 porté par un dispositif à chenilles 14 selon l'invention et supportant, dans l'exemple, une citerne 16.

Le dispositif 14 (figure 2) est composé de deux groupes 18 de chenilles espacés dans la direction transversale et placés respectivement du côté droit et du côté gauche du châssis. Chacun des groupes 18 comprend deux chenilles souples 20 disposées en parallèle pour former un couple de chenilles, que l'on peut encore appeler "chenilles jumelées". Ces chenilles sont espacées dans la direction transversale. A titre d'exemple, chaque groupe 18 peut avoir une largeur L de l'ordre de 100cm et ces groupes ménagent entre eux un espace E qui dépend de la largeur du véhicule (figure 2). Les chenilles souples 20 sont crantées extérieurement comme on peut le voir sur la figure 2.

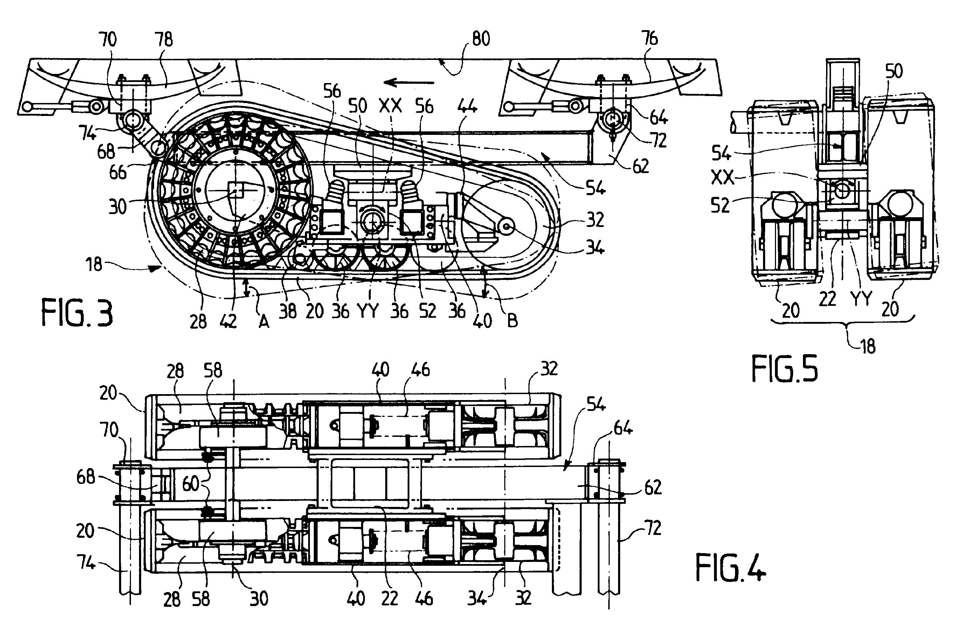

On se réfère maintenant aux figures 3 à 5 pour décrire un groupe 18 de chenilles selon une première forme de réalisation de l'invention.

On entend désigner ici par le terme "chenilles" l'ensemble constitué par une bande souple sans fin (qui constitue la chenille proprement dite) et une structure associée qui comprend essentiellement des roues autour desquelles s'enroule cette bande sans fin.

Chaque groupe 18 comprend deux chenilles 20 montées en parallèle et portées par un support commun 22 qui, dans l'exemple, a la forme d'un caisson de forme générale parallélépipédique, sur lequel les deux chenilles 20 sont fixées de part et d'autre. Ces chenilles 20 sont identiques et disposées symétriquement de part et d'autre du support commun 22. Chacune des chenilles 20 comprend une bande souple sans fin réalisée avantageusement en un matériau élastomère, par exemple à base de caoutchouc naturel, et renforcée intérieurement par des armatures (non représentées).

La bande sans fin 24 comporte extérieurement une surface de roulement avantageusement munie de crampons 26 (figure 2) et elle est munie intérieurement d'une rangée de plots (non représentés) situés dans le sens de la longueur de la bande et distants entre eux.

La bande sans fin 24 est propre à s'enrouler autour de deux roues principales : une roue antérieure 28 montée à rotation autour d'un axe 30 et une roue postérieure 32 montée à rotation autour d'un axe 34. La bande souple 24 s'enroule en outre autour de trois roues de support 36 de plus faibles diamètres que les roues principales 30 et 32 ainsi qu'autour d'une roue de guidage 38, laquelle est placée entre la roue principale 28 et la roue de support 36 qui lui est adjacente.

L'ensemble de ces roues est supporté par une poutre porteuse 40 fixée sur le support commun 22. Ainsi, comme on peut le voir plus particulièrement sur la figure 4, les deux poutres porteuses 40 s'étendent parallèlement entre elles dans la direction longitudinale, en étant sensiblement horizontales.

La poutre porteuse 40 comporte une extrémité antérieure 42 formant support pour la roue principale 28 et une extrémité postérieure 44 formant coulisse et supportant l'axe 34 de la roue postérieure 32. Cette extrémité 44 formant coulisse est reliée à un mécanisme tendeur et amortisseur 46 (figure 4) qui permet à la roue postérieure 32 de mettre la chenille en tension.

La structure générale d'une telle chenille (bande souple, poutre porteuse et roues de support) telle qu'elle vient d'être décrite est en elle-même connue de façon générale, en particulier d'après la publication FR-A-2 768 387 déjà mentionnée.

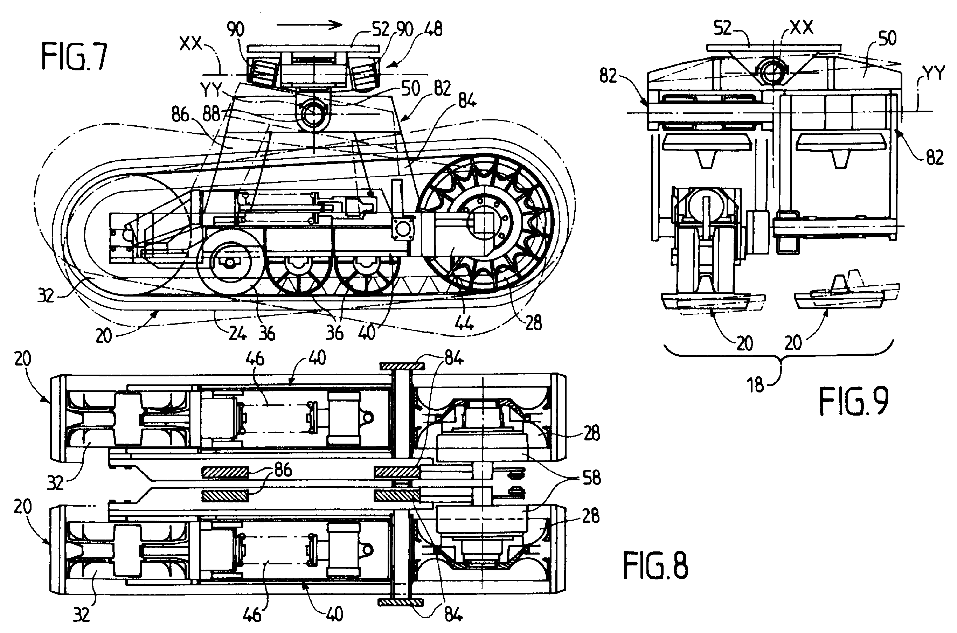

Le support commun 22 est muni d'un mécanisme articulé, à deux axes orthogonaux, interposé entre le support commun 22 et le châssis 12 du véhicule. Ce mécanisme articulé (figures 3 et 5) comprend un élément supérieur 50 propre à être relié au châssis et un élément inférieur 52 articulé d'une part à l'élément supérieur autour d'un axe longitudinal XX et d'autre part au support commun 22 par l'intermédiaire d'un axe transversal YY. L'élément supérieur 50 est fixé ici sous une poutre oscillante 54 reliée au châssis 12, comme on le verra plus loin.

Ainsi, le support commun 22 (et les deux chenilles 20 qu'il supporte) peuvent se déplacer par rapport à la poutre 54 en oscillant respectivement autour des axes XX et YY. Le groupe 18 peut ainsi osciller longitudinalement autour de l'axe transversal YY et transversalement autour de l'axe longitudinal XX, ce qui permet aux deux chenilles du groupe d'épouser la configuration du sol ou du terrain sur lequel se déplace le véhicule 10.

Chacun des groupes 18 comprend un jeu de butées 56 (figure 3) propres à coopérer avec l'élément supérieur 50 du mécanisme articulé pour limiter le débattement angulaire du support commun 22, donc des chenilles 20, par rapport à la poutre oscillante 54. Ces butées sont conçues ici pour permettre une amplitude d'oscillation qui correspond à un intervalle angulaire A de 10° vers l'avant et à un intervalle angulaire B de 10° vers l'arrière (figure 3). En outre, chacun des groupes de chenilles comprend un autre jeu de butées (non représenté) pour définir une amplitude d'oscillation du support commun 22 par rapport à la poutre oscillante 54 autour de l'axe longitudinal XX. Dans l'exemple, cette amplitude d'oscillation correspond à un intervalle angulaire de 5° de chaque côté (figure 5).

Comme on peut le voir plus particulièrement sur la figure 4, chacune des roues 28 est équipée intérieurement d'un frein 58 du type à tambour, muni d'une commande 60.

Chacune des poutres 54 comporte une première extrémité 62 (ici l'extrémité postérieure) articulée à un premier étrier 64 et une seconde extrémité 66 (ici l'extrémité antérieure), articulée, par l'intermédiaire d'une biellette 68, à un deuxième étrier 70. Les étriers 64 et 70 possèdent des pivots respectifs 72 et 74 qui s'étendent parallèlement entre eux dans la direction transversale. Les pivots 72 et 74 sont communs aux deux groupes 18 (figure 4).

Les étriers 64 et 70 sont portés respectivement par deux suspensions 76 et 78 portées par un cadre support 80 propre à être fixé sous le châssis 12 du véhicule de manière à constituer un ensemble préfabriqué et prêt à être installé. Dans l'exemple les suspensions 76 et 78 sont du type à lames, mais elles pourraient bien entendu être d'un autre type, en particulier mécanique, hydraulique ou pneumatique.

Dans une variante de réalisation (non représentée), les suspensions 76 et 78 de chaque poutre oscillante 54 pourraient être fixées directement sous le châssis du véhicule, sans utiliser un cadre intermédiaire 80 comme indiqué précédemment.

Dans l'exemple de réalisation représenté, chacun des groupes de chenilles n'est pas motorisé. Toutefois il pourrait être envisagé, dans une variante de réalisation, de motoriser les roues principales 28 ou les roues principales 32.

Une solution envisageable est de disposer d'un moteur hydraulique couplé au moteur du véhicule tracteur.

On se réfère maintenant à la forme de réalisation des figures 6 à 9. Dans l'exemple, le véhicule 10 est un véhicule du type remorque analogue à celui de la figure 1, mais est équipé d'un dispositif 14 de structure différente.

On retrouve, comme dans la forme de réalisation précédente, deux groupes 18 chacun formés de deux chenilles 20. Chacune des chenilles 20 s'apparente à celle de la forme de réalisation précédente et les éléments correspondants sont désignés par les mêmes références numériques. En bref, la chenille 20 comprend une bande souple sans fin 24 s'enroulant autour de deux roues principales 28 et 32 et autour de trois roues de support 36. La roue de guidage 38 de la forme de réalisation précédente est ici supprimée.

Ces roues sont portées par une poutre porteuse 40 de structure analogue, mais l'extrémité coulissante 44 de la poutre est ici placée vers l'avant et non pas vers l'arrière.

La poutre porteuse 40 de chaque chenille 20 est portée par un berceau 82 muni de deux branches antérieures 84 fixées de part et d'autre de la poutre et d'une branche postérieure 86 fixée d'un côté de la poutre.

Les berceaux 82 sont distincts et propres à osciller de manière indépendante autour d'un pivot transversal 88 d'un support commun qui est ici confondu avec l'élément inférieur 52 d'un mécanisme articulé 48 analogue à celui de la forme de réalisation précédente. Le pivot 88 définit un axe transversal horizontal YY. Le mécanisme articulé 48 comprend aussi un élément supérieur 50 possédant un plateau 52 propre à être monté sous le châssis 12 du véhicule.

L'élément inférieur 52 du mécanisme articulé porte un jeu de butées 90 propres à limiter l'amplitude d'oscillation de chacun des berceaux 82 autour de l'axe 88. Cette amplitude d'oscillation correspond à un intervalle angulaire de 10° vers l'avant et de 10° vers l'arrière.

Par ailleurs, l'élément supérieur 50 comprend un autre jeu de butées (non représentées) pour limiter l'amplitude d'oscillation du support commun par rapport au châssis autour de l'axe longitudinal XX. Ainsi, les deux chenilles 20 d'un même groupe 18 peuvent osciller de manière indépendante autour de l'axe transversal YY et l'ensemble peut également pivoter autour de l'axe longitudinal XX.

Dans l'exemple de réalisation, l'élément supérieur 52 du mécanisme articulé 48 est propre à être fixé directement sous le châssis du véhicule.

Il est envisageable cependant de réaliser cet élément supérieur sous la forme d'une tourelle propre à pivoter sous le châssis autour d'un axe vertical pour constituer un ensemble pivotant, analogue aux roues directrices d'un véhicule.

Dans ce cas, il faudra prévoir un mécanisme à parallélogramme interposé entre les deux tourelles pour coordonner le pivotement des deux tourelles, à la manière des roues directrices d'un véhicule automobile.

Bien entendu, l'invention n'est pas limitée aux formes de réalisation décrites précédemment et est susceptible de nombreuses variantes.

Comme déjà indiqué, il est envisageable, notamment pour des véhicules de grande largeur, de prévoir un ou plusieurs groupes supplémentaires de deux chenilles entre deux groupes de chenilles placés respectivement du côté droit et du côté gauche du véhicule.

Les roues principales autour desquelles s'enroulent les chenilles peuvent être soit libres, soit motrices, en fonction des applications considérées.

Dans le cas d'un véhicule tracté, il est envisageable, dans certains cas, de prévoir un entraînement mécanique, par exemple un moteur hydraulique actionné par le moteur du véhicule tracteur.

On comprendra que chaque groupe de chenilles peut être réalisé en tant qu'ensemble séparé propre à être monté directement sous le châssis du véhicule, comme c'est le cas dans la deuxième forme de réalisation précitée, soit être monté sur un cadre prêt à être installé sous le châssis du véhicule, comme dans le cas de la première forme de réalisation.

La première forme de réalisation des figures 1 à 5 offre l'avantage que les deux axes orthogonaux, et notamment l'axe transversal, sont plus près du sol que dans la forme de réalisation des figures 6 à 9.

L'invention trouve une application particulière aux véhicules tout terrain, qu'ils soient motorisés ou tractés.

## Revendications

1. Dispositif à chenilles souples propre à être implanté sous le châssis d'un véhicule,
caractérisé en ce qu'il comprend au moins deux groupes (18) de chenilles (20) propres à être espacés dans la direction transversale et comprenant chacun deux chenilles (20), à bande souple sans fin (24), montées en parallèles et portées par un support commun (22), et en ce que le support commun (22) est muni d'un mécanisme articulé (48) propre à être fixé au châssis (12) du véhicule et comprenant un axe transversal (YY), en sorte que le support commun (22) d'un groupe de chenilles peut osciller autour dudit axe transversal indépendamment du support commun d'un autre groupe de chenilles.

2. Dispositif selon la revendication 1, caractérisé en ce que le mécanisme articulé (48) comprend en outre un axe longitudinal (XX) s'étendant orthogonalement par rapport à l'axe transversal (YY), en sorte que le support commun (22) d'un groupe de chenilles peut osciller autour de deux axes orthogonaux (XX, YY).

3. Dispositif selon la revendication 2, caractérisé en ce que le mécanisme articulé (48) comprend un élément supérieur (50) propre à être relié au châssis (12) et un élément inférieur (52) articulé d'une part à l'élément supérieur par l'axe longitudinal (XX) et d'autre part au support commun (22) par l'axe transversal (YY), de sorte que l'axe longitudinal se trouve placé au dessus de l'axe transversal.

4. Dispositif selon l'une des revendications 1 à 3, caractérisé en ce qu'il comprend un jeu de butées (56; 90) pour définir une amplitude d'oscillation du support commun (22) par rapport au châssis autour de l'axe transversal (YY).

5. Dispositif selon l'une des revendications 1 à 4, caractérisé en ce que chacune des deux chenilles (20) d'un même groupe (18) de chenilles comprend une poutre porteuse (40) supportant des roues (28, 32, 36, 38) autour desquelles s'enroule la bande souple sans fin (24), et en ce que les deux poutres porteuses (40) sont montées fixes sur le support commun (22) en étant parallèles et espacées l'un de l'autre.

6. Dispositif selon la revendication 5, caractérisé en ce que le support commun (22) est fixé, par l'intermédiaire du mécanisme articulé (48), sur une poutre oscillante (54) propre à osciller autour d'un pivot transversal (72) par rapport au châssis.

7. Dispositif selon la revendication 6, caractérisé en ce que chaque poutre oscillante (54) a une première extrémité (62) articulée à un premier étrier (64) et une seconde extrémité (66) articulée, par une biellette (68), à un deuxième étrier (70), et en ce que le premier étrier (64) et le second étrier (70) sont montés sous le châssis du véhicule par l'intermédiaire de suspensions (76, 78).

8. Dispositif selon l'une des revendications 6 et 7, caractérisé en ce qu'il comprend un cadre (80) propre à être fixé sous le châssis (12) du véhicule et sur lequel sont montées les poutres oscillantes respectives (54) des groupes (18) de chenilles.

9. Dispositif selon l'une des revendications 1 à 4, caractérisé en ce que chacune des deux chenilles (20) d'un même groupe (18) de chenilles comprend une poutre porteuse (40) supportant des roues (28, 32, 36, 38) autour desquelles s'enroule une bande souple sans fin (24), et en ce que les deux poutres porteuses (40) sont propres à osciller de manière indépendante autour d'un pivot transversal du support commun (22) en restant dans des plans parallèles et espacés l'un de l'autre.

10. Dispositif selon la revendication 9, caractérisé en ce que le support commun (22) est monté sous le châssis (12) par l'intermédiaire du mécanisme articulé (48).

11. Dispositif selon la revendication 10, caractérisé en ce que le mécanisme articulé (48) est fixé sous le châssis soit directement soit par l'intermédiaire d'une tourelle d'axe vertical.

12. Dispositif selon l'une des revendications 1 à 11, caractérisé en ce que chacune des deux chenilles (20) d'un même groupe (18) de chenilles comprend des roues (28, 32, 36, 38) autour desquelles s'enroule la bande souple sans fin (24) et en ce que l'une au moins des roues est motrice.

13. Dispositif selon l'une des revendications 1 à 11, caractérisé en ce que chacune des deux chenilles (20) d'un même groupe (18) de chenilles comprend des roues (28, 32, 36, 38) autour desquelles s'enroule une bande souple sans fin et en ce que toutes les roues sont non-motrices.

14. Dispositif selon l'une des revendications 12 et 13, caractérisé en ce que l'une au moins des roues (28) est équipée d'un frein (58), en particulier d'un frein à tambour.
